Europäisches Patentamt

European Patent Office

Office européen des brevets

(11) Veröffentlichungsnummer : **0 513 021 B1**

(12) **EUROPÄISCHE PATENTSCHRIFT**

(45) Veröffentlichungstag der Patentschrift :
**30.08.95 Patentblatt 95/35**

(51) Int. Cl.⁶ : **H01M 8/24, H01M 8/12**

(21) Anmeldenummer : **91901738.4**

(22) Anmeldetag : **13.12.90**

(86) Internationale Anmeldenummer :
**PCT/EP90/02175**

(87) Internationale Veröffentlichungsnummer :
**WO 91/11829 08.08.91 Gazette 91/18**

(54) **FESTELEKTROLYT-BRENNSTOFFZELLE UND VERFAHREN ZU IHRER HERSTELLUNG.**

(30) Priorität : **01.02.90 DE 4002951**

(43) Veröffentlichungstag der Anmeldung :
**19.11.92 Patentblatt 92/47**

(45) Bekanntmachung des Hinweises auf die
Patenterteilung :
**30.08.95 Patentblatt 95/35**

(84) Benannte Vertragsstaaten :
**AT BE CH DE ES FR GB GR IT LI NL SE**

(56) Entgegenhaltungen :
**CH-A- 490 742**
**DE-A- 1 806 514**
**DE-B- 2 747 467**
**FR-A- 1 357 431**
**FR-A- 1 403 729**
**FR-A- 2 182 650**
**GB-A- 2 018 833**
**US-A- 3 464 861**

(56) Entgegenhaltungen :
**Patent Abstracts of Japan, Band 12, Nr 277
(E-640)(3124), 30. Juli 1988; & JP- A-6358766
(TOA NENRYO KOGYO K.K.) 14. März 1988
Patent Abstracts of Japan, Band 13, Nr 548
(E-856)(3896), 7. Dezember 1989; & JP-
A-1227362 (MITSUBISHI HEAVY IND.) 11. September 1989**

(73) Patentinhaber : **MEDICOAT AG**
**Loonstrasse 10**
**CH-5443 Niederrohrdorf (CH)**

(72) Erfinder : **TANNENBERGER, Helmut**
**La Villetta 218**
**CH-1451 Le Château de St. Croix (CH)**
Erfinder : **GRUNER, Heiko**
**Kehlenstrasse 1014**
**CH-5712 Beinwil a. See (CH)**

(74) Vertreter : **Patentanwälte Dipl.-Ing. E. Eisele
Dr.-Ing. H. Otten**
**Seestrasse 42**
**D-88214 Ravensburg (DE)**

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

## Beschreibung

Die Erfindung bezieht sich auf ein Brennstoffzellelement, welches aus einer Kombination zweier poröser und metallischer Elektroden mit einer gasdichten und oxidischen Elektrolytschicht besteht, und ein Verfahren zu seiner Herstellung.

Brennstoffzellen sind interessante Vorrichtungen, um chemische Energie direkt in elektrische überzuführen. Theoretisch sind wesentlich höhere Umwandlungsraten erreichbar, als über den Carnot-Kreisprozess. Schon vor 150 Jahren war von R. Grove eine sehr einfache Wasserstoff/Sauerstoff-Zelle vorgestellt worden. Seit damals geht es darum, Brennstoff ( z.B. $CH_4$) elektrochemisch so mit Sauerstoff (Luft) reagieren zu lassen, dass die Oxidationsenergie von Kohlenmonoxid zu $CO_2$ und des Wasserstoffanteils zu $H_2O$ direkt in elektrische Enegie umgewandelt wird. Dabei kommt es zu folgenden Reaktionen an den Zellelektroden:

$$\text{Kathode: } O_2 + 4\,e \rightarrow 2\,O^{--}$$
$$\text{Anode: } CO + O^{--} \rightarrow CO_2 + 2\,e$$
$$H_2 + O^{--} \rightarrow H_2O + 2\,e$$

Voraussetzung hierfür ist eine gasdichte Trennung der Reaktionspartner über eine nur für Sauerstoffionen durchlässige, elektrisch aber isolierende Sperre, die Elektrolytschicht. Diese wiederum muss auf beiden Seiten so elektrisch kontaktiert werden, dass die Zu- und Ableitung der Elektronenströme möglichst verlustlos gewährleistet wird. Gleichzeitig sind gute Zugänglichkeit der Elektrolytoberflächen für die gasförmigen Reaktionspartner (CO und $H_2$ auf der Anodenseiten, $O_2$ auf der Kathodenseite) und Ableitmöglichkeit der Reaktionsprodukte ($H_2$ O-Dampf und $CO_2$ ) gefordert.

Für die meisten Brennstoffe müssen zunächst Kohlenmonoxid und Wasserstoff über vorgelagerte thermische Reaktionen (Reforming) erzeugt werden, z.B. für $CH_4$ über die Reaktionen:

$$H_2O + CH_4 \rightarrow CO + 3\,H_2$$
$$CO_2 + CH_4 \rightarrow 2CO + 2\,H_2$$

Für die nachfolgend beschriebene Erfindung ist es unerheblich, ob die Ausgangsgase für die elektrochemische Reaktion gleichzeitig innerhalb der Brennstoffzelle oder ausserhalb vorgeschaltet erzeugt worden, oder ob reiner Wasserstoff direkt in elektrische Energie umgewandelt wird.

An dieser Stelle ebenfalls aufzuführen ist, dass mit dem erfindungsgemässen Brennstoff-Zellelement auch die Prozessumkehrung möglich ist. Dabei ist vorallem an die elektrochemische Zerlegung von $H_2O$-Dampf in $H_2$ und $O_2$ gedacht, oder anderer gasförmiger Oxide, zur Brennstoffsynthese unter Stromverbrauch.

Schon viele Brennstoffzelltypen sind vorgeschlagen worden. In verschiedenen Varianten wurde versucht, die Diskrepanz zwischen den theoretischen Umwandlungsraten und den in der Praxis realisierten Werten zu überwinden. Reelle elektrochemische Reaktionsgeschwindigkeiten sind durch den Massentransport, die Elektronenleitung, durch die physikalischen Eigenschaften der verwendeten Zellelement-Materialien und durch geometrische Effekte begrenzt. Eine Schlüsselrolle spielen die beiden porösen Elektroden, deren strukturelle und materielle Langzeitstabilität ganz entscheidend die Leistungsfähigkeit des Zellelementes beeinflusst.

Unter den vielen vorgeschlagenen Zellen sind Hochtemperatur - Brennstoffzellen mit Festelektrolyt besonders interessant. Die Einsatztemperaturen dieses Zelltypes liegen zwischen 700 und 1100°C Deshalb können sie direkt mit Luft und Erdgas oder anderen gasförmigen Kohlenwasserstoffen gespeist werden. Angestrebt wird eine Zelltemperatur, welche für einen innere Reformingprozess für CO ausreichend ist. Neben Elektrizität kann gleichzeitig auch durch eine chemische Verbrennung nutzbare Wärme erzeugt werden, ein für die Gesamt-Energiebilanz sehr wichtiger Faktor. Ein einstellbarer Anteil des Brennstoffes wird verbrannt, wodurch gleichzeitig die Gesamtzelle auf einem für die elektrochemische Umwandlung günstigen Temperaturniveau gehalten wird. Als Feststoffelektrolyt für diesen Zelltyp wird bevorzugt kubisch-stabilisiertes $ZrO_2$ eingesetzt, ein bei höheren Temperaturen Sauerstoffionen-leitendes Material mit sehr gutem elektrischen Widerstand für Elektronenleitung.

Da ein Einzelelement nur eine niedrige elektrische Spannung erzeugt, werden viele Einzelelemente zu Batterien zusammengebaut. Die Einzelzellen müssen untereinander elektrisch in Serie verbunden sein, mit einem sehr gut Elektronen-leitenden Material und möglichst niedrigem Kontaktwiderstand. Innerhalb der Zellbatterie müssen Luft und Brennstoff in systemoptimaler Weise durch die Einzelelemente strömen können, unter strenger gasdichter Trennung der beiden Reaktionspartner. Solche "Zell-stacks" benötigen noch äussere Zu- und Ableitungen für Strom und Gase. Für Hochtemperatur-Zellstacks bestehen besondere Probleme, da das wesentliche Bauelement, nämlich der Festelektrolyt, ein keramisches Material ist. Trotz sehr sorgfältiger Abstimmung von Materialien und Herstellmethoden gelang es bisher nicht, den im Betrieb immer aufgrund thermischer Gradienten und unterschiedlicher Ausdehnungskoeffizienten entstehenden mechanischen Belastungen längerfristig standzuhalten. Einzelne Elektrolytelemente brechen unter den erzeugten mechanischen Spannungen, die Gasdichtheit geht sukzessiv verloren und der Wirkungsgrad sinkt. Steigende Temperaturen infolge der chemischen Brennstoffreaktion zerstören den Zellstack.

Obwohl kleine Batterien anfangs erfolgreich betrieben wurden, sind alle in den 70ger Jahren realisierten Stacks aufgegeben worden. Aufgrund neuer Keramiktechnologie zeichnen sich jetzt bessere Realisierungsmöglichkeiten ab, ohne allerdings die sich widersprechenden Eigenschaften bezüglich Zellphysik und Zellmechanik überwinden zu können: US - PS Nr. 3, 460, 991 beschreibt z.B. eine Festelektrolyt-Zellbatterie in Röhrenform. Ein gleichartiger Aufbau wird von Westinghouse 1979 in einer Veröffentlichung mit dem Titel "Thin Solid Fuel Cell/Battery Power Generation System" beschrieben, wobei ein poröses Keramikrohr als eigentliche Trägerstruktur verwendet wird. Unter Benützung verschiedener Beschichtungsmethoden werden nacheinander die poröse Kathode, die dichte Elektrolytschicht, die poröse Anode und zusätzliche elektrisch leitende und elektrisch isolierende Schichten aufgebaut. Auch in Japan wurde eine Batterie in Röhrenform erfolgreich bis zu einer Ausgangsleistung von 1 kW gebaut und getestet. Wie in einer Veröffentlichung des Elektrochemical Laboratory, Ibaraki 305, Japan beschrieben, wurde versucht, an Stelle unterschiedlicher Beschichtungsmethoden wenigstens alle Zellelemente mit Hilfe der thermischen Spritztechnik aufzubauen. Die japanische Lösung unterscheidet sich von der amerikanischen weiter darin, dass an Stelle von $ZrO_2$ Keramik poröse $Al_2O_3$- Röhren eingesetzt werden. Gleichzeitig versuchten die Japaner mehrere Zellen in Serie auf einem Keramikrohr zu erzeugen, während im Westinghouse-Modell jede Keramikröhre nur ein Zellelement ist. Beiden Konstruktionen haftet der Nachteil an, dass aufgrund ungenügender Gasdichtheit Abstriche in der Zellperformance zu tragen sind.

Um die Dichtheit des Elektrolyten zu steigern und gleichzeitig die Packungsdichte gegenüber einer aus Röhren aufgebauten Batterie zu erhöhen, wurden Lösungen in Planartechnik vorgeschlagen. In einer vom Argonne National Laboratory 1983 erfolgten Veröffentlichung wird unter dem Titel " Advanced Fuel Cell Development" ein monolithisches Design beschrieben, mit wabenförmigen Oeffnungen für die Gastransportebenen. Gepresste und gesinterte Eletrolytstrukturen werden dabei mit den metallischen Elektrodenplatten mit Hilfe von Hochtemperatur-Verschmelzung verbunden, eine Konstruktion welche alle mechanischen Schwierigkeiten beinhaltet. Versuche, hier weiterzukommen, sind der US-PS No 4, 721 556 zu entnehmen. Eine sehr kompakte Zellbatterie wird durch die Verwendung freitragender, dünner Elektrolytplatten erzeugt, welche durch Plasmaspritzen unter kontrollierten Abscheidebedingungen hergestellt wurden. Allerdings kann die erforderliche Gasdichtheit erst mittels einer Hochtemperatur-Sinterung sichergestellt werden, wobei gleichzeitig eine Einebnung der Platten und eine Oberflächenglättung erzielt wird. Danach werden die porösen Elektroden im Flammspritzverfahren aufgebracht, und mehrere solcher Zell-Elemente mit Hilfe von strukturierten Metallplatten (Interconnector) zu Batterien ergänzt. Dem Vorteil einer optimalen Packungsdichte steht der Nachteil extremer mechanischer Spannungsbeanspruchung gegenüber, wenn in dieser Sandwichkonstruktion Gasdichtheit gewährleistet sein soll. Aufgrund der Zellkonstruktion sind die Gasströme erschwert. Weiter ist keine Einzelelementprüfung vor der Batterieerzeugung möglich. Und wenn während des Betriebes ein Einzelelement fehlerhaft arbeitet, ist eine Reparatur unmöglich.

Aufgabe der vorliegenden Erfindung ist deshalb, eine Hochtemperatur-Festelektrolytbrennstoffzelle der eingangs beschriebenen Art zu realisieren, welche die genannten Nachteile nicht beinhaltet, einfach und kostengünstig herstellbar ist, einzeln vor einer Serienverschaltung geprüft und zu Zellstacks verknüpft werden kann, ohne dass mechanische Spannungen den Langzeitbetrieb gefährden.

Die Aufgabe wird erfindungsgemäss dadurch gelöst, dass die Konstruktion des Zellelementes in einer Form erfolgt, welche nach der Prüfung jeder Einzelzelle den Aufbau sowohl röhrenförmiger Stacks als auch Batterien in Planartechnik ermöglicht.

Erfindungsgemäss wird eine Konstruktion erzielt, die für die Massenströme von Luft (Sauerstoff), Brennstoff (Wasserstoff) und Reaktionsprodukten (Abgas) in den verschiedensten Anordnungen optimierbar ist. Es zeigt sich nämlich, dass je nach Betriebstemperatur der Brennstoffzelle und eingesetztem Brenngas der Luftmassenstrom das fünf- bis zehnfache Volumen des Brenngasstromes haben sollte, um bei hoher Zelleffizienz für eine ausgeglichene Temperaturverteilung innerhalb der Zellbatterie zu sorgen.

Möglichst materialsparend wird die Zellstruktur so aufgebaut, dass die Umwandlung von wenigstens 85% des Brennstoffmassenstromes elektrochemisch erfolgt. Etwa 15% werden chemisch verbrannt, um so kostengünstig die optimale Arbeitstemperatur für die Hochtemperaturzellelemente einzustellen (Sauerstoffionenleitfähigkeit im Elektrolyten) und die inneren Reforming-Reaktionen (CO-Erzeugung) selbständig ablaufen zu lassen. Die freigesetzte Wärme ist für die Gesamtbilanz zu berücksichtigen.

Erfindungsgemäss findet die chemische Verbrennung der eingestellten Menge des Brennstoffmassenstromes gleichmässig über die Elektrolytoberfläche verteilt statt. So werden unzulässige Temperaturgradienten in den Zellelementen vermieden, und die Führung der internen elektrischen Ströme optimiert.

Für die Herstellung der aktiven Zellelemente wird erfindungsgemäss ein Verfahren eingesetzt. Eine oder beide der porösen Elektroden und die Elektrolytschicht können ohne Unterbrechung des Abscheideverfahrens und simultan für mehrere Elemente gleichzeitig erzeugt werden.

Vorteilhaft hat die nach dem erfindungsgemässen Verfahren hergestellte Elektrolytschicht eine für die Sauerstoffionenleitfähigkeit optimierte Schichtdicke und gleichzeitig die erforderliche Gasdichtheit. Die eingestellte Restleckrate liegt unter $10^{-6}$ mbar.l/cm·s, gemessen mit Helium.

Die Porosität der erfindungsgemäss hergestellten Elektroden ist für einen optimlaen Gastransport eingestellt. Sie haben genügend elektrische Querleitfähigkeit, welche für eine gleichmässige elektrochemische Umwandlung pro Oberflächeneinheit erforderlich ist.

Ein wesentliches Merkmal der erfindungsgemässen Brennstoffzelle ist, dass als tragendes Element keine poröse Keramik verwendet wird. Eine Metallkonstruktion ist Träger der aktiven Zelle und gleichzeitig eine Elektrode. Sie sichert die mechanische Stabilität der Einzelzelle und ermöglicht den spannungsfreien Aufbau von Zellbatterien aus Einzelelementen. Innerhalb eines stabilen Metallrahmens ist ein poröser Metallbereich eingebettet, welcher den Elektrolyten trägt. Dennoch bilden Metallrahmen und poröser Metallteil gemeinsam eine Elektrode des erfindungsgemässen Zellelementes. Es kann wahlweise die Luft- oder die Brennstoffelektrode sein. Durch In-Serie-Schaltung der Zellanode eines Elementes mit der Zellkathode der nächsten Einzelzelle entsteht ein Zellstack. Diese Konstruktion verbindet die Einzelelemente mechanisch, verschaltet sie elektrisch und trennt den Brennstoffgasstrom vom Luftstrom hermetisch ab. Damit besteht eine klare Abgrenzung der erfindungsgemässen Zelle zu der in CH-PS Nr.515 622 beschriebenen Lösung, wo auf einer porösen Metallplatte ist die gesamte Zellbatterie gleichzeitig aufgebaut ist. Die einzelnen Zellelektroden sind durch elektrisch isolierende und elektrisch leitende Schichten miteinander verknüpft und gegenseitig abgegrenzt. Bei dieser Konstruktion in Dünnschichttechnik werden mechanische Spannungsprobleme geradezu impliziert. Bei Temperaturwechselbeanspruchung kann eine Entlastung nur über Risse in der Elektrolytschicht erfolgen, weshalb eine funktionierende Zellbatterie nach diesem Vorschlag nie verwirklicht wurde.

Ein weiteres Merkmal der Erfindung ist die Kombination eines dicken und porösen Metallstützkörpers mit einer dünnen und dichten Elektrolytschicht zur Minimalisierung der Spannungen an dieser kritischen Metall/Keramik-Grenze. Selbst wenn Metall und Keramik den gleichen thermischen Ausdehnungskoeffizienten besitzen, treten am Metall/Keramik-Uebergang mechanische Spannungen auf, verursacht von Temperaturgradienten und infolge nicht identischer Temperaturabhängigkeit der thermischen Ausdehnungskoeffizienten beider Materialien. Diese mechanischen Spannungen werden aber von dem porösen Metallträger abgefedert, unterstützt durch die erfindungsgemässe mechanische Entkopplung zwischen aktivem Zellbereich und Rahmenkonstruktion. Gleichzeitig ist die erfindungsgemässe durch das Vakuum-Plasma-Spritzverfahren aufgebrachte, dünne Elektrolytschicht mit ihrer eingestellten Lamellenstruktur flexibel genug, um die mechanische Restbelastung ohne Rissbildung dauerhaft zu überstehen.

Die Erfindung wird im nachfolgenden anhand von Zeichnungen näher erläutert.

Fig.1 zeigt einen Schnitt durch das erfindungsgemässe Zellelement.

Fig.2 zeigt eine Brennstoffzellbatterie, aufgebaut aus Einzelzellen gemäss Fig.1 in Röhrenform

Fig. 3 zeigt eine Brennstoffzellbatterie in Planartechnik, ebenfalls aus einer Serienschaltung von Einzelzellen gemäss Fig.1

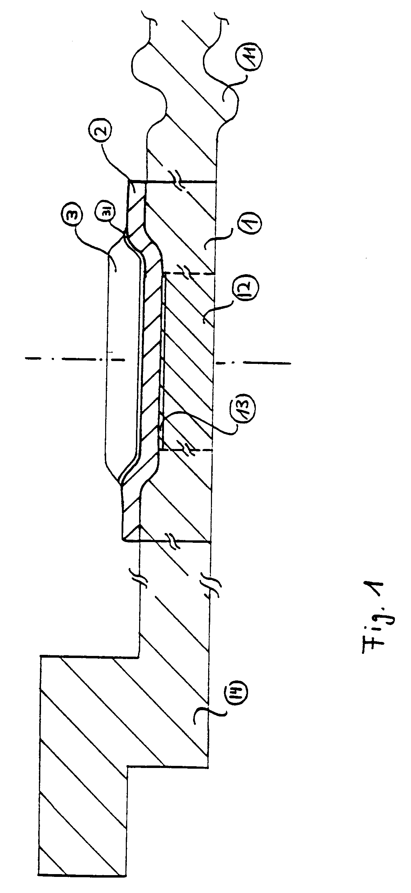

Das in Fig. 1 schematisch dargestellte Brennstoffzellelement ist die erfindungsgemässe 3-Schichtkombination, bei welcher mit (1) der metallische Träger bezeichnet ist, welcher gleichzeitig eine Elektrodenfunktion übernimmt. Es kann die Kathode oder die Anode des Zellelementes sein, wobei die Materialauswahl neben den elektrischen und thermomechanischen Bedingungen durch die Atmosphäre auf der freien Aussenseite der Elektrode bestimmt ist: Reduzierend auf der Brennstoffseite infolge des Wasserstoffanteils, oxidierend auf der Luftseite infolge des Sauerstoffanteils.

Da die Elektrode (1) Trägerfunktion hat, ihre Dicke aufgrund der mechanischen Anforderungen festgelegt wurde, besitzt sie gleichzeitig die geforderte und ausreichende elektrische Querleitfähigkeit. Elektrische Rückströme innerhalb des Zellelementes infolge inhomogener elektrochemischer Stromerzeugung in der Elektrolytfläche ausgeschlossen. Mit (12) ist der Teil der metallischen Trägerplatte bezeichnet, welcher eine eingestellte Porosität besitzt. Sie ist unter den Gesichtspunkten einer schnellen Gaszufuhr zur Elektrolytoberfläche und der bestmöglichen elektrischen Kontaktierung der Elektrolytoberfläche optimiert. Durch die Wahl der Porosität unter Berücksichtigung der vorhandenen Metall/Elektrolytkombination, wird die Elektronen-Uebernahme durch Sauerstoffionenbildung einerseits und die Elektronen-Abgabe bei der elektrochemischen Brennstoffoxidaton andererseits günstig beeinflusst. Aus gleichen Gründen kann bei der erfindungsgemässen Zelle zwischen der porösen Struktur (12) der Metallelektrode (1) und der Elektrolytschicht (2) eine dünne Zusatzschicht (13) eingelagert sein. Sie kann zusätzlich die Aufgabe haben, die elektrochemischen Reaktionen durch Grenzschichteffekte katalytisch zu beschleunigen. Aus gleichen Gründen kann zwischen der Elektrolytschicht (2) und der porösen Gegenelektrode (3) ebenfalls eine dünne Zusatzschicht (31) eingelagert sein.

Für die Herstellung der porösen Struktur (12) der Metallelektrode (1) eignet sich das thermische Spritzen. Vorzugsweise wird die Vakuum-Plasma-Spritztechnik (VPS) eingesetzt. Die Kornfraktionierung für das Spritzpulver ist in weiten Grenzen so gewählt, dass die Flammenergie nur den Feinanteil aufschmilzt, den mittleren Kornbereich nur erweicht und die groben Körner praktisch nicht beeinflusst. Diese werden als harte Partikel in die Spritzschicht eingelagert. Zusammen mit den erweichten Partikeln der mittleren Pulverfraktion werden sie mit Hilfe der aufgeschmolzenen Feinkörner zu einer stabilen, porösen Struktur verklebt. Die Kornfraktionierung des Spritzpulvers bestimmt die Porosität der Spritzschicht. Nur die materialfreie Schichtbereiche zählen, welche untereinander verbunden sind. Durch diese Kanäle findet der Gastransport statt.

Auf die Metallelektrode (1) ist die Elektrolytschicht (2) vorzugsweise im VPS-Verfahren aufgebracht. Es ist bekannt, dass mit diesem Verfahren besonders dichte oxidische Spritzschichten herstellbar sind. Das ist z.B. aus der Veröffentlichung: "Dense oxide coatings" Procedings ATTAC-1988 Conf., Osaka Japan, zu entnehmen. Mit Hilfe der Spritzpulverauswahl und der Beschichtungsparameter wird die Elektrolytschicht (2) so abgeschieden, dass eine festhaftende, dichte Lamellenstruktur entsteht. Ihre Restleckrate, gemessen mit Helium liegt unter $10^{-6}$ mbar.l/ cm·s, unabhängig von der gewählten Schichtdicke.

Die Materialauswahl für die Elektrolytschicht unterliegt den Gesetzen der Sauerstoffionenleitfähigkeit. Bevorzugt wird mit $Y_2O_3$ stabilisiertes $ZrO_2$ eingesetzt, welches vollständig in der gegen Phasenumwandlung stabilen kubischen Phase vorliegt. Es gilt hier festzuhalten, dass die Erfindung unabhängig von der Wahl des Elektrolyten ist. Sie ist auch auf Materialien übertragbar, welche die Sauerstoffionenleitfähigkeit bei im Vergleich zu $ZrO_2$ niedrigeren Temperaturen zulassen. Um die Schmelztemperatur von $ZrO_2$ abzusenken, und so die Abscheidebedingung für die VPS-Beschichtung zu erleichtern, können z.B. 3% $Al_2O_3$ im Schmelzverfahren dem Zirkonoxid zugefügt sein. Ein ähnliches Vorgehen ist für andere Zusatzstoffe denkbar, um die Sauerstoffionenleitfähigkeit bei niedrigeren Temperaturen zu ermöglichen. Je mehr die Temperatur für ausreichende Sauerstoffionenleitfähigkeit abgesenkt werden kann, desto grösser die Materialauswahl für den metallischen Träger (1) und für die Gegenelektrode (3).

Die Elektrolytschicht (2) ist über den Rand des porösen Bereichs (12) des metallischen Stützkörpers hinaus abgeschieden. Damit wird die elektrische Isolation beider Elektroden (1) und (3) gesichert. Sie endet aber deutlich vor dem Bereich (11) des metallischen Trägers (1), welcher zum Ausgleich von mechanischen Spannungen die aktive Zelle (12, 2 und 3) umgibt. Mit (14) ist der Teil des metallischen Trägers (1) bezeichnet, welcher für den Aufbau der Zellbatterie benützt wird. Er ist wesentlich dicker und konstruktiv den mechanischen Anforderungen zur dichten Verbindung einzelner Zellelemente angepasst. Damit wird die Aufgabe des Bereiches (11) verständlich. Die in den gasdichten Einzelzellen-Verbindungen thermisch induzierten mechanischen Belastungen müssen vom aktiven Zellbereich (12, 2, 3) ferngehalten werden.

In Fig.1 ist der Bereich (11) als Federelement gezeichnet. An seiner Stelle sind andere Konstruktionen denkbar.

Zellelement (1) kann eine runde oder eine rechteckige Platte sein, oder als röhrenförmiges Teil aufgebaut sein. Als wesentliches erfinderisches Element ist in jedem Fall der aktive Zellbereich (12, 2, 3) gegenüber der Halterung mechanisch entkoppelt.

Der poröse Trägerbereich (12) kann auch durch Sintertechnik hergestellt sein. So wie bei der Herstellung durch das VPS-Verfahren Pulver aus Trägermaterial (1) verwendet wird, wird beim Einsintern des Bereiches (12) in die Trägerplatte (1) feine Metallkugeln der gleichen Legierung verwendet. Sintertemperatur, Pressdruck und Kugeldurchmesser sind zur Erzielung der gerorderten Porosität auf einander abgestimmt.

Für die Trägerplatte (1) kommen alle bekannten Hochtemperatur - Legierungen in Frage: Als Kathode geschaltet besonders oxidationsbeständige Materialien, und als Anode eingesetzt, in reduzierender Atmosphäre stabile Legierungen.

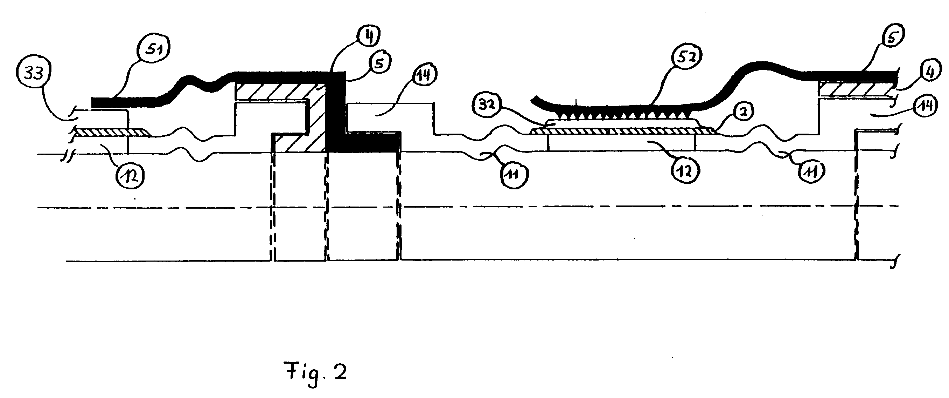

Fig. 2 zeigt ein aus röhrenförmigen Zellelementen aufgebauter Zellstack. Die mechanische Entkoppelung der aktiven Zellbereiche (12, 2, 3) von der Verbindungsstelle (14, 4, 5) ist auch in die Kontaktierfedern (52, 51) übertragen. Ueber sie und den stabilen Bereich (5) wird die Elektrode (3) des einen Zellelementes elektrisch mit der Elektrode (1) des nächsten in Serie geschaltet. Die Randbereiche (14) der einzelnen Zellen sind durch das Isolierteil (4) elektrisch getrennt. Die Teile (4) sind zur Anpassung der thermischen Ausdehnungskoeffizienten bevorzugt aus $Si_3N_4$ hergestellt. Zur Verbindung der Einzelzellen ist der Bereich (14) der metallischen Trägerplatte mit dem Isolierstück (4), dieses mit dem Kontaktteil (5), welches wiederum mit Bereich (14) des nächsten Elementes gasdicht verbunden. Alle Verbindungsteile sind stabil genug, um die mechanischen Spannungen aufgrund der Temperaturwechselbelastung dauerhaft zu überstehen. Die Entkopplung (11) verhindert die Weiterleitung der mechanischen Spannungen in die aktiven Zonen.

Besitzt die Gegenelektrode (3) genügend elektrische Querleitfähigkeit (Beispiel (33) in Fig.2) so ist die Kontaktierung mit Hilfe des federnden Teiles (51) auf ihren Randbereich beschränkt. Im Fall, dass die Gegenelektrode sehr dünn ausgebildet ist, (Beispiel (32) in Fig.2), wird mit Hilfe der Kontaktfeder (52) die gesamte Oberfläche gleichmässig elektrisch abgegriffen.

Wie in Fig. 2 dargestellt , kann eine röhrenförmige Batterie aus vielen Einzelzellen bestehen. Gleichzeitig können mehrere Röhren zu einem elektrochemischen Kraftwerk verschaltet werden. Die Gesamtzahl der Einzelelemente richtet sich nach der erforderlichen elektrischen Leitung.

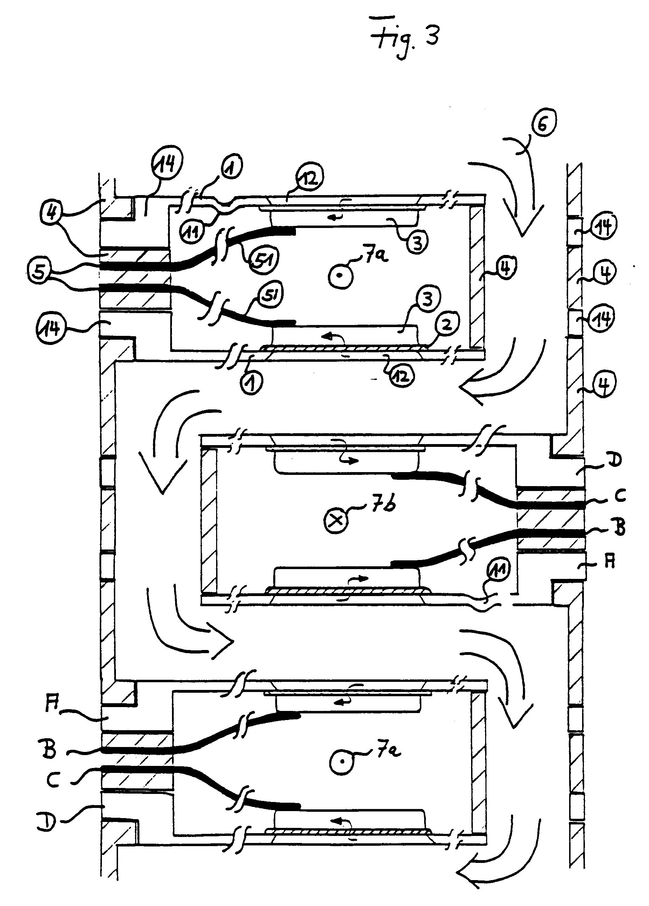

Fig. 3 zeigt einen Zellstack, welcher aus erfindungsgemässen Einzelzellen in Planartechnik aufgebaut ist. Wieder sind die aktiven Zellzonen von der mechanischen Zellverknüpfung entkoppelt. Gasstrom (6) (z.B. Brenngas) strömt auf der rechten und linken Seite von oben nach unten, und horizontal durch die angeordneten Zellelemente auf der zugehörigen Elektrodenseite (1). Gasstrom (6) (z.B. Luft) strömt von unten nach oben und horizontal durch die Elektrodenkammern an der Gegenelektrode (3) vorbei, immer im rechten Winkel zum Gasstrom (6). In der Kammer (7a) tritt der Gasstrom (6) aus der Bildebene heraus, bei Kammer (7b) in die Bildebene ein. Die Kammern (7a) und (7b) sind durch seitliche nicht gezeigte Kanäle miteinander verbunden, zu den abgebildeten Vertikalkanälen der Gasströmung (6) um 90 versetzt.

Bei dem in Fig. 3 gewählten Beispiel sind die Einzelelemente auf rechteckige Platten. Gleiche Elektroden sind sich jeweils zugewendet ( (3) zu (3), (1) zu (1)) wodurch eine strukturierte Metallplatte (Interconnector) zur elektrischen Kontaktierung und Gastrennung entfällt, wie sie beispielsweise in der US-Ps.Nr. 4,721 556 als wesentliches Erfindungselement beschrieben ist.

Für die In-Serie-Schaltung der Einzelelemente werden die zur Aussenseite geführten, durch die Isolationselemente (4) von einander elektrisch isolierten Kontakte (A), (B), (C) und (D) verwendet.

Die Kammern (6,7a,7b) für die Luft- und Brenngasströmung sind durch die Abmessungen der Isolierelemente (4) in ihren Dimensionen so festgelegt, dass die Massenströme in einem gezielt eingestellten Verhältnis die Brennstoffbatterien durchströmen können. Der Luftmassenstrom sollte wenigstens das fünffache des Brennstoffmassenstromes betragen.

Anhand von zwei Beispielen wird die erfindungsgemässe Herstellung von Einzelzellen und ihre Verknüpfung zu Zellbatterien näher erläutet.

Beispiel 1:

Auf einem zylindrischen Körper, $\varnothing$ 20 mm, sind ringförmige Metallteile (14) in einem Abstand zueinander angeordnet, der dem porösen Trägerkörperteil (12) entspricht. Durch vakuum-Plasma-Beschichtung von Pulver der gleichen Metall-Legierung, wie Metall-Teil (14), werden die Freiräume (12) mit einer stabilen Metallspritzschicht verbunden. Die Kornfraktion des Pulvers liegt zwischen 15 und 125 µm, wobei für eine mittlere Porenweite von 25 µm etwa 20% der Pulverkörner kleiner als 32 µm sein sollten und etwa 40% grösser als 62 µm. Die Gesamtporosität für dieses Anwendungsbeispiel beträgt 40%.

Nach neuer Einjustierung der Abdeckmasken wird auf die poröse Elektrode (12) und einen Teil der ringförmigen Metallteile (14) die Elektrolytschicht (2) aufgespritzt, ebenfalls im VPS-Verfahren. Das Spritzpulver ist sehr feinkörnig, um die notwendige Spritzschichtdichte zu erzeugen. Für eine Leckrate $\leqq 10^{-6}$ mbar.l/cm·s (gemessen mit Helium), ist ein Pulver der Körnung 6 .. 16 µm erforderlich. Die Restleckrate ist homogen über die Elektrolytfläche verteilt und setzt sich aus sehr vielen, winzigen Einzelundichtigkeiten zusammen. Die Gasdurchlässigkeit beträgt maximal 15%, sodass wenigstens 85% der Brenngase elektrochemisch umgewandelt werden.

Nach einer weiteren Einjustierung der Abdeckmasken kann die Gegenelektrode (3) aufgespritzt werden, in ihrer Porosität wieder den Bedingungen der Gaszufuhr und -abfuhr entsprechend optimiert, in der Schichtdicke der vorgesehenen Kontaktierungsart angepasst. ist die Gegenelektrode (3) Kathode (Sauerstoffseite) so wird vorzugsweise eine Perowskit-Schicht aufgespritzt. Im Fall der Gegenelektrode (3) als Anode (Brenngasseite), besteht sie vorzugsweise aus einem Ni/ZrO$_2$ Gemisch, oder aus NiO.

In der nachfolgenden Tabelle sind die wesentlichen Beschichtungsparameter für alle 3 Schichten aufgelistet.

| Parameter | Träger | Elektrolyt | Gegenelektrode |
|---|---|---|---|
| Pulver | NiCrAlY | $ZrO_2$ + 12% $Y_2O_3$ | $Ni/ZrO_2$ |
| Kornbereich | 15.. 125 µm | 6 – 16 µm | 6 ...75 µm |
| Kammerdruck | 120 mbar | 40 mbar | 80 mbar |
| Plasmastrom | 800 A | 680 A | 740 A |
| Plasmagas | Ar/He | Ar/H | Ar/H |
| Schichtdicke | 2 .. 5 mm | 100 µm | 0,5 mm |
| Kontaktierung | Querleit- | | Randabgriff |
| | fähigkeit | | |
| | zusätzlich | | |
| | dünne Perowskit-Schicht | | |

Nach der Beschichtung erfolgt eine He-Dichtheitskontrolle, bevor die Batteriemontage durchgeführt wird. Die geprüften Einzelelemente werden zur Röhrenbatterie zusammengestellt und nach dem Stand der Technik miteinander gasdicht und elektrisch in Serie geschaltet verbunden. Da die elektrische Kontaktierung der Gegenelektrode (3) nach der Montage überprüft werden kann, wird eine dicke Schicht mit genügender Querleitfähigkeit bevorzugt, welche nur an einer Stelle kontaktiert werden muss.

Beispiel 2:

In planare Metallplatten (1) der Abmessung 100 x 100 mm aus ferristischem Stahl sind im Bereich (12) poröse Metallgebiete eingesintert. Wie im Beispiel 1 werden im VPS-Verfahren nacheinander die Elektrolytschicht (2) und die Gegenelektrode (3) abgeschieden. Nach einer Sichtprüfung der Einzelelemente wird bei jeder Platte die He-Dichtheit gemessen und die Kontaktierung der Gegenelektroden (3) angefertigt. Es wird die Flächenkontaktierung und genügende Querleitfähigkeit bevorzugt. Mit Hilfe der Keramikdistanzstücke (4) werden die beiden Gasführungsebenen dimensioniert und gegenseitig gasdicht abgeschlossen. An dieser Stelle wird besonders deutlich, dass die Vermeidung des mechanischen Kraftschlusses zwischen aktivem Zellbereich (12, 2, 3) und Randkonstruktion (4, 5, 14) die Temperaturwechselbeständigkeit im Dauerbetrieb sichert.

**Patentansprüche**

1. Brennstoffzellelemente, bestehend aus einer Kombination zweier poröser und metallischer Elektroden (1), (3) und einer gasdichten und oxidischen Elektrolytschicht (2) dadurch gekennzeichnet, daß die metallische Elektrode (1) gleichzeitig Träger für das aktive Zellelement (12, 2, 3) und ein Teil (14) einer stabilen Rahmenkonstruktion darstellt, welches für den Aufbau einer Zellbatterie aus mehreren Einzelelementen erforderlich ist, daß die Elektrode (1) aufgrund der mechanischen Anforderungen so dick ausgebildet ist, daß sie ausreichende elektrische Querleitfähigkeit besitzt, um eine gleichmäßige, über die Elektrolytfläche homogen verteilte elektrochemische Reaktion zu ermöglichen, wobei die Elektrode (1) im Bereich der aktiven Zelle eine dicke, poröse Struktur (12) aufweist, welche mit einer Entkopplungsstelle (11) materialidentisch ist, und daß zwischen dem aktiven Teil des Zellelements (12, 2, 3) und dem für den Aufbau einer Batterie aus Einzelzellen notwendigen Teil (14) der Elektrode (1) die mechanische Entkopplungsstelle (11) eingebaut ist, welche in der Rahmenkonstruktion thermisch induzierte Spannungen vom aktiven Bereich der Elektrode fernhält.

2. Brennstoffzellelement nach Anspruch 1, dadurch gekennzeichnet, dass die Elektrode (1) aus planen Metallplatten runder oder rechteckiger Form aurgebaut ist, mit einer Dicke, welche den mechanischen Beanspruchungen angepasst ist, und mit einem Randbereich (14), welcher wenigstens doppelt so dick ist, wie die Stärke der Metallplatte.

3. Brennstoffzellelement nach Anspruch 1, dadurch gekennzeichnet, dass die Elektrode (1) eine zylindrische Form besitzt, mit einem Innendurchmesser von 1 bis 5 cm.

4. Brennstoffzellelement nach einem der genannten Ansprüche, dadurch gekennzeichnet, dass die Entkoppelungsstelle (13) als Federelement allseitig die aktive Zellzone (12, 2, 3) umgibt.

5. Brennstoffzellelement nach Anspruch 1 bis 4, dadurch gekennzeichnet, dass der poröse Teil (12) der Trägerelektrode (1) mit Hilfe der thermischen Spritztechnik, vorzugsweise im Vakuum-Plasma-Spritzverfahren, materialidentisch durch Aufspritzen von Pulver aus Trägerelektrodenmaterial hergestellt ist, wobei ihre Dicke wenigstens der Stärke der Trägerelektrode entspricht und ihre Porosität durch die Wahl der Spritzpulverkörnung gezielt eingestellt ist.

6. Brennstoffzellelement nach Anspruch 5, wobei als Kornfraktionierung 15 bis 125 $\mu$m gewählt wird, wobei etwa 20% der Körner unter 32 $\mu$m und etwa 40% über 62 $\mu$m liegen, zur Erzeugung einer offenen Porosität von 40% bei einer mittleren Porengrösse von etwa 25 $\mu$m.

7. Brennstoffzellelement nach einem der genannten Ansprüche, dadurch gekennzeichnet, dass die Trägerelektrode (1), aus einer der bekannten Hochtemperaturlegierungen besteht, als Kathode oder als Anode geschaltet sein kann und dass die Materalauswahl für die Elektrode (1) sich nach den atmosphärischen Bedingungen richtet (Sauerstoffseite oder Brenngasseite).

8. Brennstoffzellelement nach Anspruch 1 bis 4, dadurch gekennzeichnet, dass der poröse Teil (12) der Trägerelektrode durch Sintertechnik in den vorgesehenen Bereich der Trägerelektrode (1) eingebaut ist, wobei ihre Porosität durch die Auswahl des Sinterpulvers in Bezug zu den Sinterbedingungen gezielt eingestellt ist.

9. Brennstoffzellelement nach Anspruch 1 bis 8, dadurch gekennzeichnet, dass die Elektrolytschicht (2), nach den Gesetzen der Sauerstoffionenleitfähigkeit ausgewählt wird, vorzugsweise aus stabilisiertem, kubischen $ZrO_2$ besteht, mit einem Stabilisierungsanteil vom 12 Gewichts% $Y_2O_3$ , und dass die Elektrolytschicht durch das VPS-Verfahren direkt auf die poröse Trägerelektrode aufgespritzt wird, nicht dicker als 100 $\mu$m zur Sicherung der Sauerstoffionenleitfähigkeit bei gleichzeitiger Gasdichtheit und ausreichender Isolation gegen Elektronenleitung.

10. Elektrolytschicht nach Anspruch 9, dadurch gekennzeichnet, dass für ihre Herstellung gebrochenes Schmelzoxidpulver der Körnung 6 bis 16 $\mu$m verwendet wird, zur Erzeugung einer dichten, feinlamellaren Schichtstruktur mit einer homogenen, über den Schichtbereich verteilten Restleckrate unter $10^{-6}$ · mbar·l/cm·s.

11. Elektrolytschicht nach Anspruch 10, dadurch gekennzeichnet, dass infolge ihrer Restleckrate nicht mehr als 15% des Brenngases gleichmässig über der Elektrolytoberfläche verteilt verbrennt, wodurch sich im Elektrolyten eine für die Sauerstoffionenleitfähigkeit günstige Temperatur einstellt, und gleichzeitig die thermische Erzeugung von CO aus C $H_4$ , $CO_2$, und $H_2O$ ermöglicht wird (innere Reformung).

12. Brennstoffzellelement nach den Ansprüchen 8 und 9 dadurch gekennzeichnet, dass, unter Berücksichtigung der gewählten Metall/Elektrolytkombination, zur Verbesserung der elektrischen Kontaktierung der Elektrolytschicht (2) und/oder katalytischer Beschleunigung der elektrochemischen Reaktion, zwischen der Trägerelektrode (12) und der Elektrolytschicht (2) eine dünne, etwa 1 ...10 $\mu$m starke Grenzschicht (13) eingelagert ist, welche vorzugsweise aus Perowskit besteht, wenn Elektrode (1) Kathode ist.

13. Brennstoffzellelement nach einem der genannten Ansprüche, dadurch gekennzeichnet, dass auch die Gegenelektrode (3) durch thermisches Spritzen unmittelbar auf die Elektrolytschicht (2) abgeschieden wird. Die Pulverauswahl und die Einstellung der Abscheideparameter erfolgt so, dass eine Porosität von z.B. 40% entsteht, bei einer mittleren Porengrösse von beispielsweise 25 um entsteht.

**14.** Gegenelektrode nach Anspruch 13, dadurch gekennzeichnet, dass ein Ni/ZrO$_2$ - Gemisch aufgespritzt, wird zur Erzeugung einer Cermetschicht mit einem Ni-Volumenanteil zwischen 25 und 75%, unter Verwendung eines Spritzpulvers der Körnung 6 bis 75 $\mu$m.

**15.** Brennstoffzellbatterie, aufgebaut aus erfindungsgemässen Zellelementen nach den Ansprüchen 1 bis 14, dadurch gekennzeichnet, dass die Einzelelemente nach einer Dichheitsprüfung gasdicht miteinander verbunden sind, dabei elektrisch in Serie geschaltet werden, und dass der mechanische Kraftschluss zwischen den aktiven Zellbereichen und der Rahmenkonstruktion zum Batterieaufbau entkoppelt ist, um thermisch induzierte, aufgrund unterschiedlicher Ausdehnungskoeffizienten entstehende mechanische Spannungen von der keramischen Elektrolytschicht fernzuhalten.

**16.** Brennstoffzellbatterie nach Anspruch 15, dadurch gekennzeichnet, dass röhrenförmige Einzelelemente über ein Metallteil (5) verbunden sind, welches die Elektrode (1) am Randteil (14) mit Hilfe eines federnden Endes (51, 52) mit der Gegenelektrode (3) des nächsten Elementes in Serie schaltet, wobei über das Keramikteil (4) die elektrische Isolation zwischen den Trägerelektroden benachbarter Zellen sichergestellt wird.

**17.** Brennstoffzellbatterien nach Anspruch 15, dadurch gekennzeichnet, dass runde oder rechteckige, plane Einzelelemente in Planartechnik mit Hilfe von Isolierteilen (4) aber ohne metallische Interconnectorplatten zusammengeschaltet sind, und dass die Elektroden über die nach aussen geführten Kontaktstellen A, B, C und D in Serie geschaltet werden.

**18.** Brennstoffzellbatterien nach Anspruch 16, dadurch gekennzeichnet, dass über die Dimensionierung der Isolierteile (4) die Massenströme der Brenngase und der Luft in den getrennten Kammern (6) (7) in einem bestimmten Verhältnis durch die Batterie geführt werden, bevorzugt so, dass der Luftmassenstrom bis zum 10fachen des Brenngasmassenstromes betragen kann.

## Claims

**1.** Solid fuel cell, composed of a combination of two porous and metal electrodes (1), (3) and a gastight and oxidic electrolyte layer (2), characterised in that the metal electrode (1) at the same time serves as support for the active cell element (12, 2, 3) and as part (14) of a stable frame structure, which is required for construction of a battery of cells comprising several individual elements; that because of mechanical requirements, the electrode (1) is constructed thick enough for it to have adequate transverse electrical conductivity to allow an even electrochemical reaction distributed uniformly over the electrolyte surface, the structure (12) of said electrode (1) in the area of the active cell being thick and porous and of identical material to a decoupling point (11); and that the mechanical decoupling point (11), which keeps thermally induced stresses in the frame structure away from the active area of the electrode, is installed between the active part of the cell element (12, 2, 3) and the part (14) of the electrode (1) necessary for the composition of a battery made up of individual cells.

**2.** Solid fuel cell according to Claim 1, characterised in that the electrode (1) is formed from round or rectangular, plane metal plates with a thickness adapted to an edge area (14) at least twice as thick as the thickness of the metal plate.

**3.** Solid fuel cell according to Claim 1, characterised in that the electrode (1) is in the shape of a cylinder with an inside diameter of 1 to 5 cm.

**4.** Solid fuel cell according to one of the specified claims, characterised in that the decoupling point (13) in the form of a spring element surrounds the active cell zone (12, 2, 3) on all sides.

**5.** Solid fuel cell according to Claims 1 to 4, characterised in that the porous part (12) of the support electrode (1) is produced of identical material by means of the thermal spraying technique, preferably in the vacuum plasm spraying process, by spraying powder of the material of the support electrode onto it, its thickness corresponding to at least the thickness of the support electrode and its porosity being purposely adjusted by selection of the grain size of the spraying powder.

6. Solid fuel cell according to Claim 5, wherein 15 to 125 $\mu$m is selected as grain size, about 20% of the grains being less than 32 $\mu$m and about 40% of the grains more than 62 $\mu$m, for generation of an open porosity of 40% with an average pore size of about 25 $\mu$m.

7. Solid fuel cell according to one of the specified claims, characterised in that the support electrode (1), made of one of the known high-temperature alloys, can be switched as cathode or as anode, and that the material selected for the electrode (1) is dependent on atmospheric conditions (oxygen side or fuel side).

8. Solid fuel cell according to Claims 1 to 4, characterised in that the porous part (12) of the support electrode is installed into the area of the support electrode (1) provided by sintering, its porosity being purposely adjusted in relation to the sintering conditions by selection of the sintering powder.

9. Solid fuel cell according to Claims 1 to 8, characterised in that the electrolyte layer (2) is selected according to the laws of the conductivity of oxygen ions, is preferably made of stabilised cubic $ZrO_2$ with a stabilising content of 12% by weight of $Y_2O_3$; and that the electrolyte layer is sprayed directly onto the porous support electrode using the vacuum plasma spraying process in a thickness not more than 100 $\mu$m, to ensure conductivity of the oxygen ions while at the same time maintaining gastightness and adequate insulation against electron conduction.

10. Electrolyte layer according to Claim 9, characterised in that broken melt oxide powder with a grain size of 6 to 16 $\mu$m is used for its production to generate a dense, fine laminar layer structure with a uniform residual leak rate distributed over the layer area of less than $10^{-6} \cdot$ mbar·l/cm·s.

11. Electrolyte layer according to Claim 10, characterised in that because of its residual leak rate, not more than 15% of the fuel gas evenly distributed over the surface of the electrolyte burns, as a result of which a temperature favourable to the conductivity of oxygen ions is attained in the electrolyte and at the same time the thermal generation of CO from $CH_4$, $CO_2$ and $H_2O$ is facilitated (internal reforming).

12. Solid fuel cell according to Claims 8 and 9, characterised in that taking into account the selected metal/electrolyte combination, when electrode (1) is a cathode, a thin boundary layer (13) about 1...10 $\mu$m thick and preferably made of perovskite is inserted between the support electrode (12) and the electrolyte layer (2) to improve electrical contacting of the electrolyte layer (2) and/or to catalytically accelerate the electrochemical reaction.

13. Solid fuel cell according to one of the specified claims, characterised in that the counter-electrode (3) is also deposited directly onto the electrolyte layer (2) by thermal spraying, the powder selection and adjustment of the depositing parameters being such as to result in a porosity of 40%, for example, with an average pore size of 25 $\mu$m, for example.

14. Counter-electrode according to Claim 13, characterised in that a mixture of $Ni/ZrO_2$ is sprayed on to form a cermet layer with an Ni content of between 25 and 75% by vol. using a spraying powder with a grain size of 6 to 75 $\mu$m.

15. Battery of solid fuel cells, composed from cells according to the invention in accordance with Claims 1 to 14, characterised in that after a density check, the individual elements are connected to one another so as to be gastight, being connected electrically in series, and that the mechanical non-positive connection between the active cell areas and the frame structure for battery construction is disconnected in order to keep thermally induced mechanical stresses resulting from different coefficients of expansion away from the ceramic electrolyte layer.

16. Battery of solid fuel cells according to Claim 15, characterised in that the tubular individual elements are connected via a metal part (5) which connects the electrode (1) in series at the edge part (14) by means of a resilient end (51, 52) to the counter-electrode (3) of the next element, in which case the electrical insulation between the support electrodes of adjacent cells is assured by means of the ceramic part (4).

17. Battery of solid fuel cells according to Claim 15, characterised in that round or rectangular, plane individual elements are switched together in planar technique by means of insulating parts (4), but without any metal interconnector plates, and that the electrodes are connected in series via the outwardly directed contact points A, B, C and D.

**18.** Batteries of solid fuel cells according to Claim 16, characterised in that by means of the dimensioning of the insulating parts (4), the volumetric flows of the fuel gases and air into the separate chambers (6) (7) are directed through the battery in a specific ratio, preferably so that the volumetric flow of the air may amount to up to 10-times the volumetric flow of the fuel gas.

## Revendications

**1.** Elément de pile à combustible, constitué d'une combinaison de deux électrodes métalliques et poreuses (1,3) et d'une couche d'électrolyte (2) obtenue par voie d'oxydation et étanche aux gaz, caractérisé en ce que l'électrode métallique (1) représente en même temps un support pour l'élément de pile actif (12,2,3) et une partie (14) d'une construction de bâti stable, laquelle est nécessaire pour la réalisation d'une batterie de piles constituée de plusieurs éléments individuels, en ce que l'électrode (1), en raison des exigences mécaniques, présente une épaisseur telle qu'elle possède une conductibilité transversale électrique suffisante pour permettre une réaction électrochimique uniforme, répartie de façon homogène sur la surface de l'électrolyte, l'électrode (1) présentant, dans la zone de la pile active, une structure poreuse épaisse (12), laquelle est identique en ce qui concerne sa matière avec un endroit de découplage (11), et en ce que, entre la partie active de l'élément de pile (12,2,3) et la partie (14) de l'électrode (1) nécessaire pour la réalisation d'une batterie de piles individuelles, il est prévu l'endroit de découplage mécanique (11), lequel tient à l'écart des tensions thermiquement induites dans la construction de bâti, de la zone active de l'électrode.

**2.** Elément de pile à combustible selon la revendication 1, caractérisé en ce que l'électrode (1) est formée de plaques métalliques planes de forme ronde ou rectangulaire, ayant une épaisseur qui est adaptée aux sollicitations mécaniques et ayant une zone marginale (14) dont l'épaisseur est au moins double de l'épaisseur de la plaque métallique.

**3.** Elément de pile à combustible selon la revendication 1, caractérisé en ce que l'électrode (1) possède une forme cylindrique avec un diamètre interne de 1 à 5 cm.

**4.** Elément de pile à combustible selon une des revendications citées, caractérisé en ce que l'endroit de découplage (13) entoure de tous côtés, comme élément élastique, la zone de pile active (12,2,3).

**5.** Elément de pile à combustible selon les revendications 1 à 4, caractérisé en ce que la partie poreuse (12) de l'électrode de support (1) est fabriquée à l'aide de la technique d'injection thermique, de préférence par un procédé d'injection au plasma sous vide, de matière identique par pulvérisation de poudre de la matière de l'électrode de support, son épaisseur correspondant au moins à l'épaisseur de l'électrode de support et sa porosité étant réglée de façon souhaitée par le choix de la granulométrie de la poudre de pulvérisation.

**6.** Elément de pile à combustible selon la revendication 5, un fractionnement granulométrique de 15 à 125 $\mu m$ étant choisi, environ 20% des grains étant au-dessous de 32 $\mu m$ et environ 40% au-dessus de 62 $\mu m$, pour engendrer une porosité ouverte de 40% pour une taille moyenne des pores d'environ 25 $\mu m$.

**7.** Elément de pile à combustible selon l'une des revendications citées, caractérisé en ce que l'électrode de support (1) est constituée d'un des alliages à haute température connus, peut être montée comme cathode ou comme anode, et en ce que le choix de la matière pour l'électrode (1) dépend des conditions atmosphériques (côté oxygène ou côté gaz combustible).

**8.** Elément de pile à combustible selon les revendications 1 à 4, caractérisé en ce que la partie poreuse (12) de l'électrode de support est montée par technique de frittage dans la zone prévue de l'électrode de support (1), sa porosité étant réglée de façon souhaitée par le choix de la poudre de frittage en liaison avec les conditions de frittage.

**9.** Elément de pile à combustible selon les revendications 1 à 8,

caractérisé en ce que la couche d'électrolyte (2) est choisie selon les lois de la conductibilité des ions oxygène, est constituée de préférence de $ZrO_2$ cubique stabilisé, avec une proportion de stabilisation de $Y_2O_3$ de 12% en poids, et en ce que la couche d'électrolyte est pulvérisée directement sur l'électrode de support poreuse par le procédé de pulvérisation au plasma sous vide, en n'étant pas plus épaisse que 100 µm pour garantir la conductibilité des ions oxygène pour une étanchéification aux gaz simultanée et une isolation suffisante contre une conduction d'électrons.

10. Couche d'électrolyte selon la revendication 9,
caractérisée en ce que de la poudre d'oxyde de fusion fractionnée de granulométrie de 6 à 16 µm est utilisée pour sa fabrication, pour engendrer une structure de couche étanche finement lamellaire avec un taux de fuite résiduel homogène, réparti sur la zone de couche, au-dessous de $10^{-6}$ mbar.l/cm.s.

11. Couche d'électrolyte selon la revendication 10,
caractérisé en ce que, par suite de son taux de fuite résiduel, pas plus de 15% du gaz combustible brûle de façon répartie uniformément sur la surface de l'électrolyte, grâce à quoi, dans l'électrolyte, il est réglé une température appropriée pour la conductibilité des ions oxygène et, simultanément, la génération thermique de CO à partir de $CH_4$, $CO_2$ et $H_2O$ est rendue possible (reformage interne).

12. Elément de pile à combustible selon les revendications 8 et 9,
caractérisé en ce que, en tenant compte de la combinaison métal/électrolyte choisie, pour améliorer le contact électrique de la couche d'électrolyte (2) et/ou l'accélération catalytique de la réaction électrochimique, entre l'électrode de support (12) et la couche d'électrolyte (2), il est prévu une couche limite mince (13), ayant une épaisseur d'environ 1...10 µm, laquelle est constituée avantageusement de perovskite lorsque l'électrode (1) est une cathode.

13. Elément de pile à combustible selon une des revendications citées,
caractérisé en ce que que la contre-électrode (3) est également déposée directement sur la couche d'électrolyte (2) par pulvérisation thermique, le choix de la poudre et le réglage des paramètres de dépôt ayant lieu de sorte qu'une porosité de par exemple 40% est engendrée, pour une taille moyenne des pores de par exemple 25 µm.

14. Contre-électrode selon la revendication 13,
caractérisée en ce qu'un mélange $Ni/ZrO_2$ est pulvérisé, pour engendrer une couche de cermet ayant une proportion volumique de Ni entre 25 et 75%, en utilisant une poudre de pulvérisation de granulométrie de 6 à 75 µm.

15. Batterie de piles à combustible, constituée d'éléments de pile selon l'invention selon les revendications 1 à 14,
caractérisée en ce que les éléments individuels sont reliés ensemble de façon étanche aux gaz après un test d'étanchéité, montés de plus électriquement en série, et en ce que l'adhérence mécanique entre les zones de pile actives et la construction de bâti est découplée pour monter la batterie pour maintenir éloignées des tensions mécaniques induites thermiquement, engendrées en raison de coefficients de dilatation différents, de la couche d'électrolyte céramique.

16. Batterie de piles à combustible selon la revendication 15,
caractérisée en ce que des éléments tubulaires individuels sont reliés par l'intermédiaire d'une partie métallique (5), laquelle relie en série l'électrode (1), à la partie marginale (14), à l'aide d'une extrémité élastique (51,52), avec la contre-électrode (3) de l'élément suivant, l'isolation électrique entre les électrodes de support de piles voisines étant garantie par l'intermédiaire de la partie céramique (4).

17. Batterie de piles à combustible selon la revendication 15,
caractérisée en ce que des élément individuels plans, ronds ou rectangulaires, sont réunis selon une technique planaire à l'aide de parties isolantes (4) mais sans plaques d'interconnexion métalliques, et en ce que les électrodes sont montées en série par l'intermédiaire des points de contact A, B, C et D guidés vers l'extérieur.

18. Batterie de piles à combustible selon la revendication 16,
caractérisée en ce que, par le dimensionnement des parties isolantes (4), les courants massiques de gaz combustible et d'air dans les chambres séparées (6,7) sont guidés en un rapport déterminé à travers la batterie, de préférence de sorte que le courant massique d'air peut valoir jusqu'à 10 fois le courant massique de gaz combustible.

Fig. 1

Fig. 2

Fig. 3